# EUROPEAN PATENT APPLICATION

(11) **EP 1 777 923 A1**
(43) Date of publication of application: **25.04.2007**
(21) Application number: 06122196.6
(22) Date of filing: 12.10.2006
(51) Int. Cl.: H04M 1/02, H04M 1/03

(54) **Portable terminal including a sliding and slanting housing carrying a display and loudspeakers**

(30) Priority: 18.10.2005 KR 20050098172
(71) Applicant: Samsung Electronics Co., Ltd., Suwon-si Gyeonggi-do (KR)
(72) Inventor: Chung, Jin-Man c/o Samsung Electronics Co.Ltd.,, Gyeonggi-do (KR); Han, Beom-Ku c/o Samsung Electronics Co.Ltd.,, Gyeonggi-do (KR); Hwang, Chang-Hwan c/o Samsung Electronics Co.Ltd.,, Gyeonggi-do (KR)
(74) Representative: Grünecker, Kinkeldey, Stockmair & Schwanhäusser Anwaltssozietät

(57) **Abstract**

Disclosed is a portable terminal through which a user can watch displayed images with convenience. The portable terminal includes a body housing having a plurality of first keys; and a sliding housing having a plurality of second keys, a plurality of speaker units, and a display unit. The sliding housing has a shape corresponding to that of the body housing, and slides on the body housing while maintaining a state of facing the body housing so as to close and open the first keys. The display unit is slantingly cradled on the body housing after the sliding housing slides.

## Description

### BACKGROUND OF THE INVENTION

### 1. Field of the Invention

The present invention relates to a portable terminal including Digital Multimedia Broadcasting phones (referred to as DMB phone), game phones, chatting phones, camera phones, MP3 phones, cellular phones, Personal Communication System devices (referred to as PCS devices), Personal Digital Assistants (referred to as PDAs), Hand Held phones and the like, and more particularly to a portable terminal and a sliding type cradle which provides convenience to a user when viewing a broadcast on the portable terminal.

### 2. Description of the Related Art

In general, "a portable terminal" refers to an electronic device which a user can carry while wirelessly communicating with another user. In consideration of portability, design of such a portable terminal has tended not only toward compactness, slimness and lightness, but also toward providing multimedia capabilities to allow the user to pursue a wider variety of functions. In particular, future portable terminals will not only be used for many functions while still being compact and light, but also be modified to be suitable for functioning in a multimedia environment and for providing internet access and functions. Additionally, such portable terminals may be used by men and women, young and old, anywhere in the world, and are recognized as a necessity which a user always carries.

Conventional portable terminals may be classified into various types according to their appearance, such as bar-type portable terminals, flip-type portable terminals, and folder-type portable terminals. The bar-type portable terminal has a single housing shaped like a bar. The flip-type portable terminal has a flip panel which is pivotally mounted to a bar-shaped housing by a hinge unit. The folder-type portable terminal has a folder coupled to a single bar-shaped housing by a hinge unit in such a manner that the folder can be rotated in order to be folded or unfolded from the housing.

Further, portable terminals may be classified as neckwear-type terminals and wristwear-type terminals, according to the position at or the way in which a user wears the terminal. The neckwear-type terminal is worn around the neck using a lanyard or necklace, while the wristwear-type terminal is worn around the wrist.

Additionally, portable terminals may be classified as rotation-type terminals and sliding-type terminals according to ways of opening and closing the terminals. In the rotation-type portable terminal, two housings are coupled to each other in a manner that one housing rotates to open or close relative to the other while facing each other. In the sliding-type portable terminal, two housings are coupled to each other in a manner that one housing slides to open or close relative to the other. The various classifications of portable terminals are easily understood by those skilled in the art.

Further, each of the conventional portable communication terminals has been converted so as to allow a voice communication as well as a high-speed data communication. That is, as consumer demands have increased, various services have been provided using wireless communication technology for transmitting and receiving data at a high speed.

It is presently common to have a camera lens mounted in the portable communication terminal, to make it is possible to transmit image signals and the like. Meanwhile, present portable communication terminals are provided with an embedded or external camera lens module. Therefore, it is possible to perform image communication with a desired partner or to photograph a desired object.

However, the conventional portable terminal has following problems. Since a separate cradle should be used in order for a user to conveniently view data displayed on a display unit, this presents a problem of economics or cost savings to the user. It is recognized that it is convenient for a user to view data displayed on a display unit when the display unit is positioned on a slant. However, a user typically grips and slants the portable terminal with his/her hands to view the displayed data, unless the conventional portable terminal is slantingly supported using a separate cradle. Further, it is inconvenient for a user to view data displayed on the display unit which is located on a desk without the separate cradle.

In addition, in consideration of user convenience, it is important to allow for viewing of various moving pictures as well as to listen to sound when viewing moving pictures. Furthermore, it is the physical limitations of the conventional portable terminal that fail to satisfy the user's viewing preferences. The portable terminal must have at least two speakers and supply various sounds, such as high-pitched sound, stereo sound, and low-pitched sound, in order to satisfy the user's viewing preference. However, the characteristics of the portable terminal make it difficult to mount a plurality of speakers in the portable terminal.

### SUMMARY OF THE INVENTION

Accordingly, the present invention has been made to solve the above-mentioned problems occurring in conventional systems, and an object of the present invention is to provide a portable terminal and a sliding type cradle for the portable terminal, through which a user can conveniently view a screen and listen to sound.

Another object of the present invention is to provide a portable terminal and a sliding type cradle for the portable terminal, which a user conveniently uses in a DMB mode.

Still another object of the present invention is to provide a portable terminal and a sliding type cradle for the portable terminal, in which a display unit in a landscape mode is slantingly cradled and speaker units are slantingly cradled, so as to supply surround-sound from both sides of the display unit, to allow a user to conveniently view a moving picture and listen to sound.

Still another object of the present invention is to provide a portable terminal and a sliding type cradle for the portable terminal, in which a display unit is prominently located so that a user can conveniently concentrate on a displayed screen.

In order to accomplish these objects, according to an aspect of the present invention, there is provided a portable terminal which includes a body housing having a plurality of first keys; and a sliding housing having a plurality of second keys, a plurality of speaker units, and a display unit, wherein the sliding housing has a shape corresponding to that of the body housing, and slides on the body housing while maintaining a state of facing the body housing so as to close and open the first keys, and the display unit is slantingly cradled on the body housing after the sliding housing slides.

In order to accomplish these objects, according to another aspect of the present invention, there is provided a sliding type cradle for a portable terminal having a body housing and a sliding housing which slides and is slantingly cradled on the body housing, which includes guiding slots formed in the body housing, for indicating a moving direction of the sliding housing; guide members of which a portion is coupled to the guiding slot, for restrictively connecting the sliding housing to the body housing; and a supporting member rotatably connected to the body housing and the sliding housing, for slantingly supporting the sliding housing.

### BRIEF DESCRIPTION OF THE DRAWINGS

The above and other objects, features, and advantages of the present invention will be more apparent from the following detailed description taken in conjunction with the accompanying drawings, in which:
FIG. 1 is a perspective view showing a portable terminal according to the present invention;
FIG. 2 is a perspective view showing the portable terminal according to the present invention, in which a sliding housing has slid a predetermined distance;
FIG. 3 is a perspective view showing the portable terminal according to the present invention, in which the sliding housing is slantingly cradled after sliding;
FIG. 4 is a side view showing the portable terminal of FIG. 3; and
FIG. 5 is a reverse-side perspective view showing a sliding type cradle for the portable terminal of FIG. 3.

### DETAILED DESCRIPTION OF THE PREFERRED EMBODIMENTS

Hereinafter, the preferred embodiments of the present invention will be described with reference to the accompanying drawings. In the following description of the present invention, a detailed description of known functions and configurations incorporated herein is omitted to avoid making the subject matter of the present invention unclear.

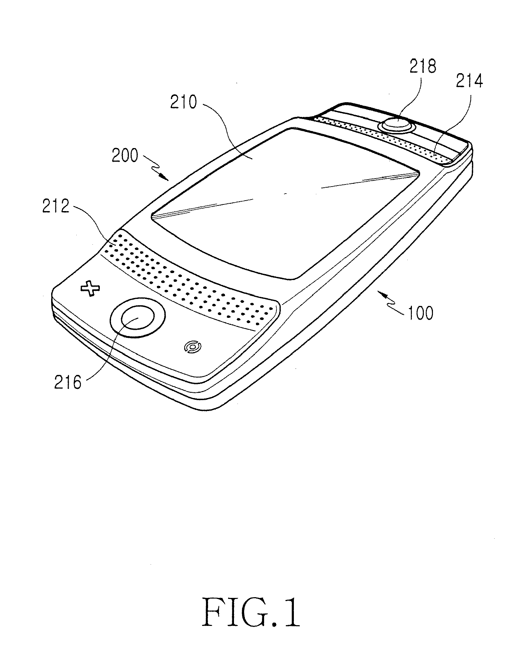

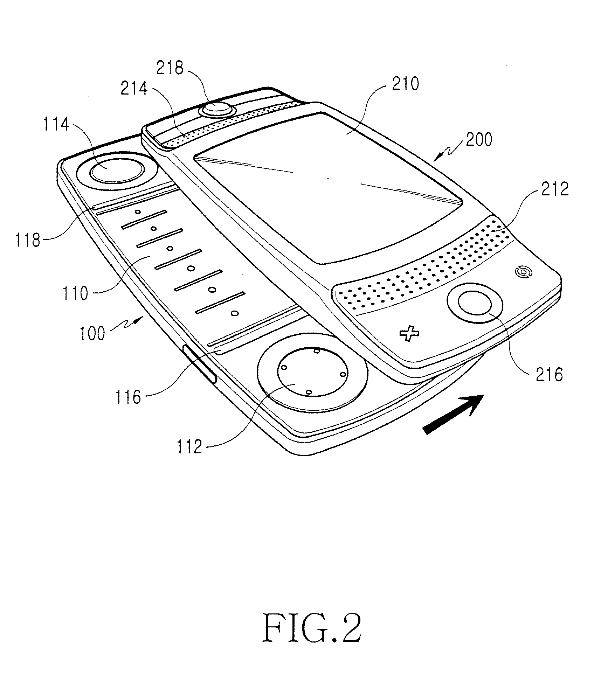

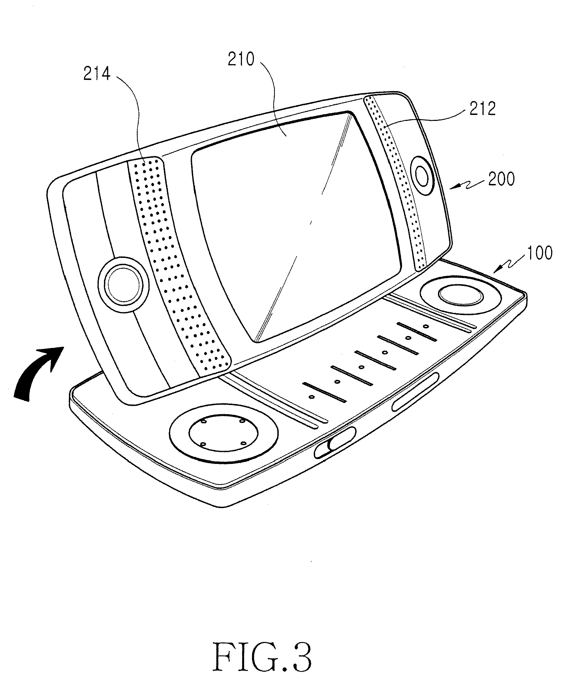

As shown in FIGS. 1 to 4, the portable terminal according to the present invention includes a body housing 100, and a sliding housing 200 having a size corresponding to that of the body housing 100. Specifically, the portable terminal according to the present invention has the body housing 100, and the sliding housing 200 which firstly slides on the body housing 100 while facing the body housing 100 and then secondly is slantingly cradled on the body housing 100. The body housing 100 includes a plurality of keys or keypads 110, 112 and 114, while the sliding housing 200 includes a display unit 210, a plurality of second keys 216 and 218, and a plurality of speaker units 212 and 214. FIG. 2 shows the sliding housing 200 moved a predetermined distance, an FIG. 3 shows the sliding housing 200 slantingly cradled after sliding.

The first and second speaker units 212 and 214 are arranged at both sides of the display unit 210 respectively, and first and second keys or keypads 216 and 218 are arranged at both sides of the first and second speaker units 212 and 214, respectively. Since the first and second speaker units 212 and 214 are arranged at both sides of the display unit 210 respectively, they provide good positioning for a user watching displayed program and to listen to sound relating to the displayed program. Further, since the first and second keypads 216 and 218 are arranged at both sides of the display unit 210 respectively, it is convenient for the user to operate the keys with both hands while watching the display unit 210.

The display unit 210 also includes a liquid crystal display unit or a touch screen, which is convex and preferably extends a predetermined thickness over the first and second keypads 216 and 218, making it helpful for the user to focus and concentrate on images displayed on the display unit 210. In addition, the first and second speaker units 212 and 214 are slantingly disposed between the display unit 210 and the first and second keypads 216 and 218, resulting in an advantageous structure for supplying three-dimensional sound to the user.

The first or central keypad 110 is disposed at a center portion on an upper surface thereof, and second and third keypads 112 and 114 are disposed at both sides of the central keypad 110, respectively. The central keypad 110 and the second and third keypads 112 and 114 are closed and opened by a sliding movement of the sliding housing 200. The central keypad 110 preferably includes a 3x4 key array relating to a communication mode.
Keypads 112 and 114 preferably include a four-way key or a rotation key.

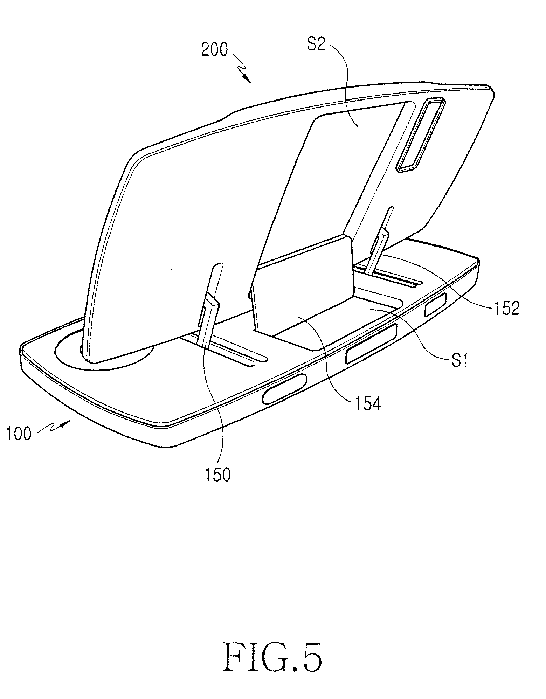

The sliding type cradle according to the present invention will be described with reference to FIGS. 1 to 5. As shown in FIGS. 2-4, the sliding type cradle includes guide slots 116 and 118 formed in the body housing 100, to facilitate moving of the sliding housing 200, guide members 150 and 152 (FIG. 5) are coupled to the guide slots 116 and 118, for restrictively connecting the sliding housing 200 to the body housing 100, and a supporting member 154 is rotatably connected to the body housing 100 and the sliding housing 200, for slantingly supporting the sliding housing 200.

As shown in FIGS. 2-4, the pair of guide slots 116 and 118 are linear and extend in a transverse direction. The guide slots 116 and 118 are formed at both sides of the central keypad 110, respectively, and are closed and opened by the sliding housing 200. The guide slots 116 and 118 are elongated and ellipsoidal in shape. The guide members 150 and 152 have a rod shape, each of which have one end rotatably restricted to a respective guide slot 116 or 118, while the other end is rotatably restricted to a bottom surface of the sliding housing 200. Further, the guide members 150 and 152 are symmetric with each other. An end of each guide member 150 and 152 is rotatably coupled to the body housing 100 and another end is rotatably coupled to the sliding housing 200, so that the body housing 100 and the sliding housing 200 rotate around the both ends of guide members 150 and 152. According to this structure, the sliding housing 200 slides on the body housing 100 and then is slantingly cradled.

The supporting member 154 has a plate shape, of which one end is connected to the body housing 100 and the other end is connected to a bottom surface of the sliding housing 200. Specifically, the other end of the supporting member 154 plays the role of a rotating shaft and slides in a second groove S2 of the sliding housing 200. Of course, movement of the supporting member 154 is dependent on movement of the sliding housing 200 relative to the body housing 100.

Furthermore, in order to receive the supporting member 154, an opening is formed at predetermined position in the body housing 100 and the sliding housing 200. The opening includes first and second grooves S1 and S2 recessed at a desired depth of the body housing 100 and sliding housing 200, respectively. The first groove S1 receives the supporting member 154 when the sliding housing 200 slides, while the second groove S2 receives the supporting member 154 when the body housing 200 slides. Specifically, the second groove S2 refers to a space in which the supporting member 154 is received while the sliding housing 200 slides. Although not shown, a flexible printed circuit board for transmitting electric signals between the body housing 100 and the sliding housing 200 is connected through an inner space of the guide members 150 and 152 to the body housing 100 and the sliding housing 200.

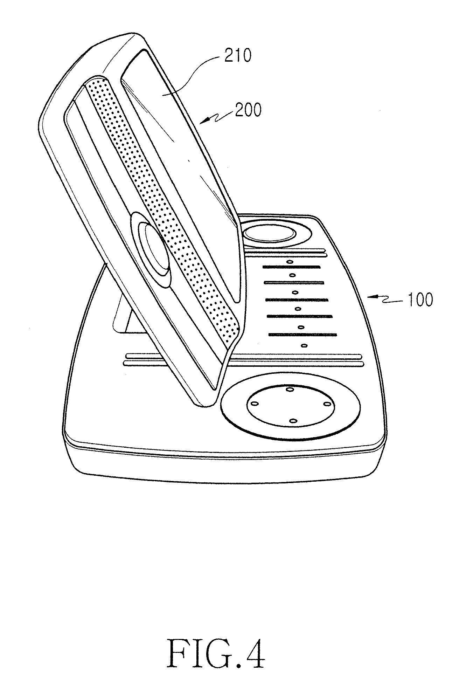

In the closed state shown in FIG. 1, the portable terminal is preferably used in a phone mode or an MP3 mode. In the state shown in FIG. 2, the portable terminal is preferably used in a game mode or a chatting mode. Further, in the fully open state shown in FIG. 3 or 4, the portable terminal is preferably used in a DMB mode. Specially, in the fully open state shown in FIG. 3, the display unit 210 is arranged in a landscape mode and is slantingly cradled, and the first and second speaker units 212 and 214 also are slantingly arranged so as to emit stereo sound, allowing the user to conveniently watch the displayed data and listen to sound. Since the stereo sound is emitted in the state that the sliding housing is slanted, the sound is directed toward the user, i.e. toward the user's ears, so that the user can listen to high quality sound.

As described above, the present invention helps the user to watch various moving pictures with convenience. Specially, according to the present invention, the convex mounted and oriented of the display unit is prominently positioned to allow the user to concentrate on a displayed screen in a certain mode. Further, in the landscape mode, as the display unit is slantingly cradled, the two speakers are also slantingly located, to effectively supply stereo sound to the user. Thus, the user can watch the screen and listen to the stereo sound with convenience.

While the invention has been shown and described with reference to certain preferred embodiments thereof, it will be understood by those skilled in the art that various changes in form and details may be made therein without departing from the scope of the invention, as defined by the appended claims.

## Claims

1. A portable terminal comprising:
a body housing (100) having keypads (110,112,114), and
a sliding housing (200) having keypads (216,218), speaker units (212,214), and a display unit (210),
wherein the sliding housing (200) has a shape corresponding to that of the body housing (100), and is adapted to slide on the body housing to maintain a facing state of the sliding housing so as to close and open the keypads (110,112,114), and is adapted to slantingly cradle the display unit (210) on the body housing (100) after the sliding of the sliding housing (200).

2. The portable terminal according to claim 1, wherein the display unit (210) is convexly mounted on an upper surface of the sliding housing (200),
first and second speaker units (212,214) are disposed at both sides of the display unit (210), respectively, and
first and second keypads (216,218) are disposed at both sides of the display unit (210), respectively.

3. The portable terminal according to claim 2, wherein the first and second speaker units (212,214) are slantingly arranged with respect to the display unit (210).

4. The portable terminal according to one of the previous claims, wherein to slantingly cradle the display unit (210) guide slots (116,118) are formed in the body housing (100), to facilitate moving of the sliding housing;
guide members (150,152) have a portion coupled to a respective guide slot (116,118), for restrictively connecting the sliding housing to the body housing, and
a supporting member (154) is rotatably connected to the body housing (100) and the sliding housing (200), for slantingly supporting the sliding housing.

5. The portable terminal according to claim 4, wherein the guide slots (116,118) linearly close and open by moving the sliding housing (200).

6. The portable terminal according to claim 4 or 5, further comprising:
first and second grooves (S1,S2) formed in an upper surface of the body housing (100) and a lower surface of the sliding housing (200), respectively, to receive the supporting member (154) in the facing state.

7. The portable terminal according to one of claims 4 to 6, wherein the guide members (150,152) have a rod shape and the supporting member (154) has a plate shape.
